(19) **Europäisches Patentamt**
**European Patent Office**
**Office européen des brevets**

(11) **EP 3 194 925 B1**

(12) **EUROPEAN PATENT SPECIFICATION**

(45) Date of publication and mention
of the grant of the patent:
**29.05.2024 Bulletin 2024/22**

(21) Application number: **15775635.4**

(22) Date of filing: **14.09.2015**

(51) International Patent Classification (IPC):
**G01N 1/28** (2006.01)    **G01N 1/30** (2006.01)
**G01N 1/36** (2006.01)

(52) Cooperative Patent Classification (CPC):
**G01N 1/30; G01N 1/36;** G01N 2001/2873

(86) International application number:
**PCT/EP2015/070927**

(87) International publication number:
**WO 2016/041890 (24.03.2016 Gazette 2016/12)**

(54) **METHOD FOR TISSUE FIXATION AND FIXED TISSUE**

VERFAHREN ZUM FIXIERUNG VON GEWEBEPROBEN UND FIXIERTE GEWEBEPROBE

PROCÉDURE DE FIXATION D'ÉCHANTILLONS DE TISSUS ET L'ÉCHANTILLON FIXÉ.

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.09.2014 US 201462051737 P**

(43) Date of publication of application:
**26.07.2017 Bulletin 2017/30**

(73) Proprietor: **Ventana Medical Systems, Inc.
Tucson, Arizona 85755 (US)**

(72) Inventors:
• **CHAFIN, David**
**Tucson, Arizona 85755 (US)**
• **OTTER, Michael**
**Tucson, Arizona 85755 (US)**
• **THEISS, Abbey**
**Tucson, Arizona 85755 (US)**
• **BAUER, Daniel**
**Tucson, Arizona 85755 (US)**

(74) Representative: **Simmons & Simmons LLP
(Munich)
Lehel Carré
Thierschplatz 6
80538 Munich (DE)**

(56) References cited:
**WO-A1-03/066560      WO-A1-2007/014742**

WO-A1-2010/066252      WO-A1-2012/110646
WO-A1-2013/038306      WO-A2-2009/149013
GB-A- 2 192 712         JP-A- H01 290 602
JP-A- 2005 211 055      US-A1- 2009 226 059
US-A1- 2011 287 475     US-A1- 2014 186 858

• **ALLEN D EVERETT ET AL: "Mitotic
phosphorylation activates hepatoma-derived
growth factor as a mitogen",** BMC CELL
BIOLOGY, BIOMED CENTRAL, LONDON, GB, vol.
12, no. 1, 13 April 2011 (2011-04-13) , page 15,
XP021097690, ISSN: 1471-2121, DOI:
10.1186/1471-2121-12-15
• **MUELLER C ET AL: "Reverse phase protein
microarrays advance to use in clinical trials",**
MOLECULAR ONCOLOGY, ELSEVIER,
AMSTERDAM, NL, vol. 4, no. 6, 16 October 2010
(2010-10-16), pages 461-481, XP027491844, ISSN:
1574-7891, DOI: 10.1016/J.MOLONC.2010.09.003
[retrieved on 2010-10-16]
• **V. M. NEUMEISTER ET AL: "Quantitative
Assessment of Effect of Preanalytic Cold
Ischemic Time on Protein Expression in Breast
Cancer Tissues",** JOURNAL OF THE NATIONAL
CANCER INSTITUTE, vol. 104, no. 23, 22 October
2012 (2012-10-22), pages 1815-1824,
XP055232415, GB ISSN: 0027-8874, DOI:
10.1093/jnci/djs438

EP 3 194 925 B1

## Description

### CROSS-REFERENCE TO RELATED APPLICATIONS

The benefit of United States Provisional Application No. 62/051,737, filed on September 17, 2014, is hereby claimed.

## BACKGROUND OF THE INVENTION

### Field of the Invention

The present invention generally relates to tissue fixation using aldehyde-based tissue fixatives.

### Description of Related Art

Aldehyde-based fixatives are used almost ubiquitously in anatomic pathology laboratories. These solutions are favored because they are easy to use and because they do an excellent job of preserving tissue morphology. However, standard techniques using aldehyde-based fixatives often fail to preserve the molecular details of the tissue. In particular, residual enzyme activity during the fixation process can alter the pattern of post-translational modifications found in the cells. This presents a problem, because post-translational modifications have become important biomarkers for cancer diagnosis and prognosis and for predicting treatment efficacy. *See* Krueger and Srivastava, Posttranslational Protein Modifications: Current Implications for Cancer Detection, Prevention, and Therapeutics, Molecular & Cellular Proteomics, Vol. 5, Issue 10, p. 1799-810 (2006-Jul-14). It therefore would be beneficial to develop reagents and processes for fixing cells using aldehyde-based fixatives that can preserve post-translational modifications during the fixation process.

In WO 2008-073187 A2, this problem is addressed by inhibiting endogenous kinase and phosphatase pathways by fixing the tissues in the presence of at least one kinase inhibitor and at least one phosphatase inhibitor and, optionally, at least one protease inhibitor. Similarly, in WO 2011-130280 A1, exogenous "degradation inhibitors" (such as protease and nuclease inhibitors) are used to prevent loss of potential analytes during fixation. However, direct inhibition of naturally occurring pathways in the tissue can affect the end results. For example, WO 2008-073187 A2 teaches that treatment of tissues with phosphatase inhibitors can cause "highly abnormal upward accumulation of abnormal levels of phosphoproteins." These methods thus do not yield reliable results. Moreover, the amounts of inhibitors necessary to adequately block enzyme activity make the methods cost-prohibitive to implement on a wide scale.

Others have developed fast-freezing methods in order to halt the action of modification enzymes (Lawson et. al. Cytotoxicity effects of cryoprotectants as single-component and cocktail vitrification solutions, 2011, vol. 62, issue 2, pages 115-122). Although fast freezing may initially slow down the action of such enzymes, it does not completely inhibit their action upon thawing of the sample and thus is not an adequate solution for preserving post-translational modifications.

## SUMMARY OF THE INVENTION

The present invention relates generally to a method for fixing samples containing intact cells by using high concentrations of aldehyde. In an embodiment, the aldehyde is present at higher-than-standard concentrations. In an embodiment, the high-concentration aldehyde-based fixative solution has an aldehyde concentration and pH sufficient to obtain a reduced time of diffusion to reach decay constant of at least 22% and up to 275% at a temperature of 2°C to 8°C. According to the method of the present invention the high-concentration aldehyde-based fixative solution is a formalin solution and the formalin has a concentration of 20% or more.

In an embodiment, the high-concentration aldehyde-based fixative solution comprises one or more buffers and has a pH in the range of 6 to 8. In an embodiment, the one or more buffers are selected from Table 1. In an embodiment, the high-concentration aldehyde-based fixative solution does not contain an effective amount of exogenously added nuclease inhibitor, phosphatase inhibitor, kinase inhibitor, or protease inhibitor.

The formalin concentration can be greater than 25% formalin, at least about 30% to 50% formalin, or from about 30% to about 40% formalin. In an embodiment, the high-concentration aldehyde-based fixative solution consists of at least about 30% formalin, optionally one or more buffers and acid or base to adjust pH to a desired level, optionally one or more stabilizers, and optionally one or more inorganic salts.

A composition is also provided comprising a cell or tissue sample immersed in a high-concentration aldehyde-based fixative solution as disclosed herein,

However, the composition is not part of the present invention.

According to the method of the present invention (a) the tissue sample is immersed in the high-concentration aldehyde fixative solution at a temperature within the range of about -20°C to about 15°C for a first time period sufficient to diffuse the solution into the tissue sample; and (b) the tissue sample is immersed in a standard aldehyde fixative solution at a second temperature within the range of about 22°C to about 50°C for a second time period sufficient to preserve post-translation modification signal of said tissue sample.

A fixed tissue sample is also provided, wherein said fixed tissue sample was fixed according to any of the methods of the invention.

In an embodiment, the fixed tissue sample is embedded in paraffin. In an embodiment, the fixed tissue sample is a formalin fixed paraffin embedded tissue sample (FFPE sample).

## BRIEF DESCRIPTION OF THE DRAWINGS

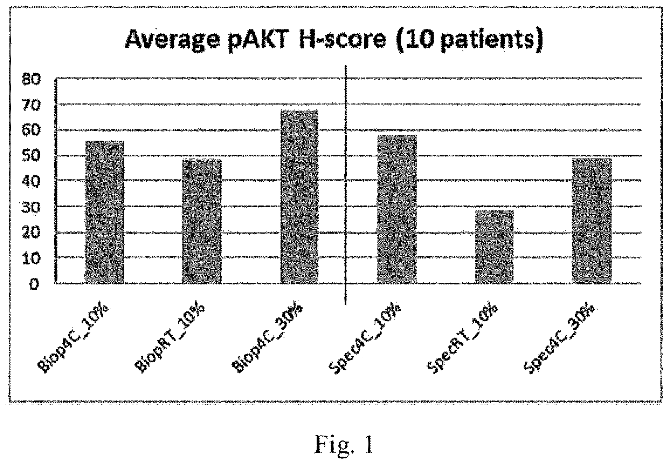

**Fig. 1:** Bar graph showing H-score of colorectal carcinomas stained with anti-phospho-Akt. "Biop4C_10%" and "Spec4C_10%": samples fixed with 10% NBF using a two temperature (4 °C/45 °C) fixation protocol. "BiopRT_10%" and "SpecRT_10%": samples fixed with 10% NBF using 24 hour room temperature fixation. "Biop4C_30%" and "Biop4C_30%": samples fixed with 30% NBF during the 4°C pre-treatment of the two temperature (4°C/45°C) fixation protocol.

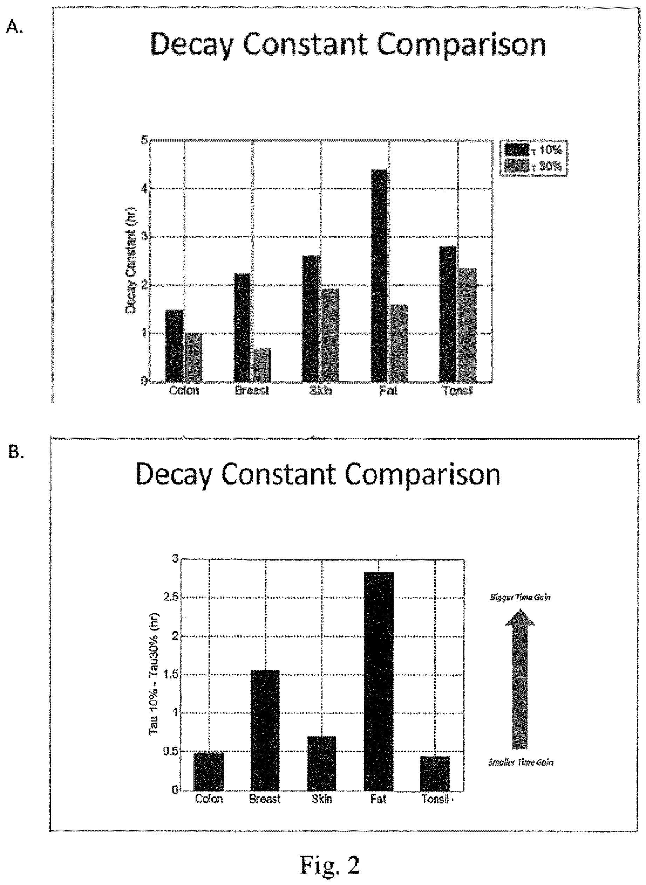

**Fig. 2:** Bar graph showing rate of diffusion in various tissues using 10% NBF versus 30% NBF. **A.** Comparison of the decay constants between 10% NBF and 30% NBF. As can be seen, 30% NBF consistently demonstrates a lower decay constant than 10% NBF, indicating that increased formalin concentration correlates with increased rate of diffusion across all tissue types tested. **B.** Demonstration of the diffusion speed gain using 30% NBF versus 10% NBF.

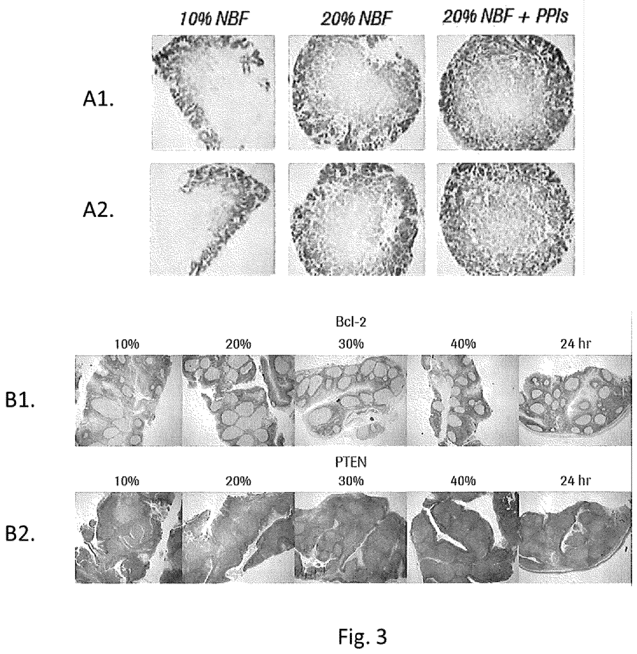

**Fig. 3:** Rows A1 and A2 illustrate 6mm Calu-3 xenografts stained for phospho-Akt after a 2 hour 4°C pre-treatment fixation with 10% NBF, 20% NBF, or 20% NBF + phosphatase inhibitor cocktail and a 2 hour 45°C fixation using 10% NBF. Row B1 illustrates human tonsil samples cut to 4mm thickness and stained with anti-phospho Bcl2 after fixation under the same two-temperature fixation using 10% NBF, 20% NBF, 30% NBF, or 40% NBF in the cold temperature step, with a 24 hour room temperature fixation in 10% NBF as a control. Row B2 illustrates human tonsil samples cut to 4mm thickness and stained with anti-phospho-PTEN after fixation under a two-temperature fixation using 10% NBF, 20% NBF, 30% NBF, or 40% NBF in the cold temperature step, with a 24 hour room temperature fixation in 10% NBF as a control.

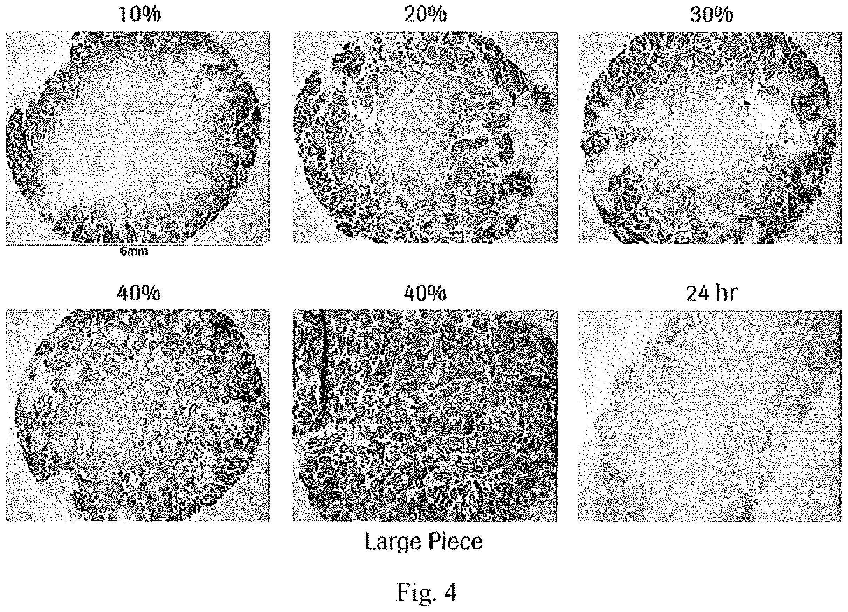

**Fig. 4:** 6mm Calu3 xenograft tumors stained with anti-phospho-Akt after fixation under a two-temperature fixation using an initial 4° C treatment in 10%, 20%, 30%, or 40% NBF for 2 hours, followed by a 2 hour treatment in 10% NBF at 45°C for 2 hours to initiate crosslinking. An additional larger sample (piece) was similarly fixed using an initial 4°C treatment in 40% NBF. An additional sample was placed into room temperature (RT) 10% NBF for 24 hours as a control.

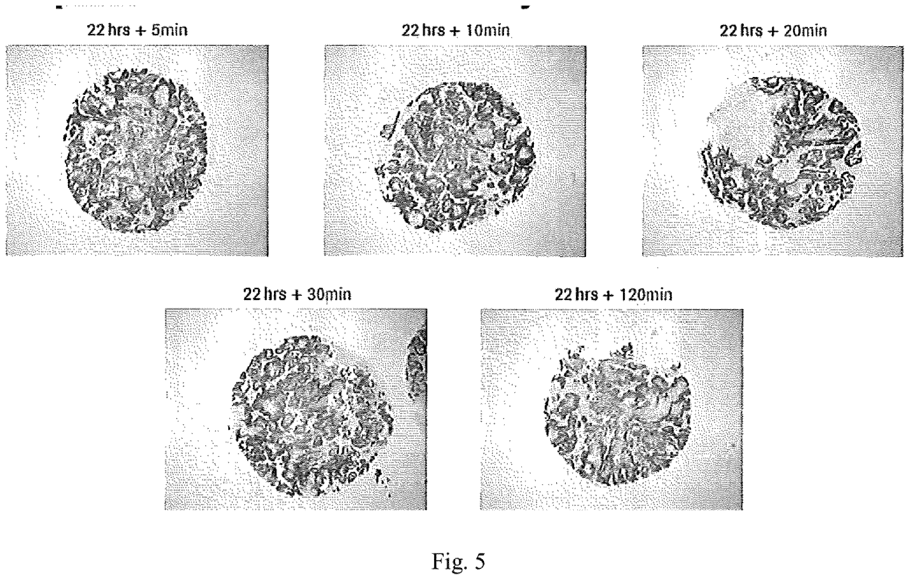

**Fig. 5:** 6mm core samples of Calu3 xenografts stained with anti-phospho-Akt after fixation under a two-temperature fixation using an initial cold temperature treatment with 30% NBF for 22 hours, followed by a high temperature treatment with 10% NBF for indicated times (5 - 120 minutes).

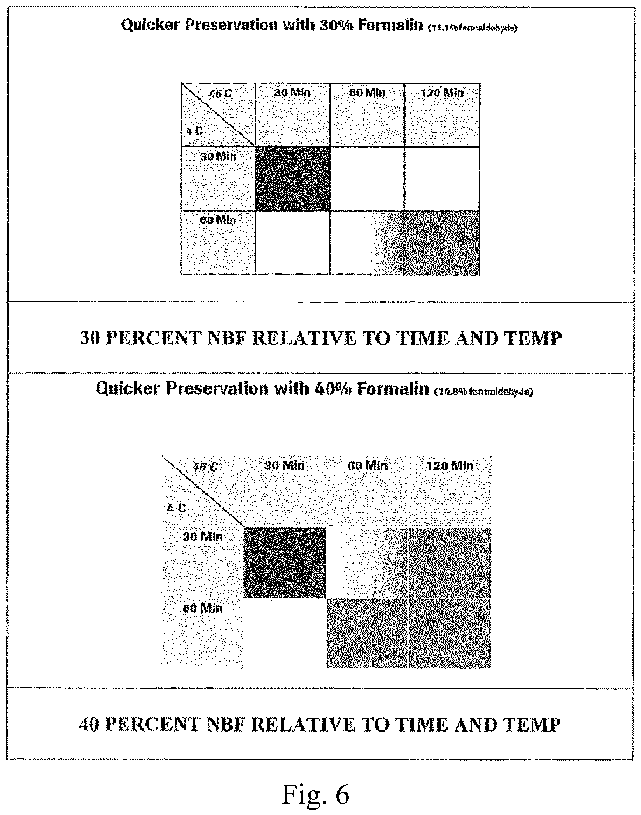

**Fig. 6:** Scoring of H&E-stained tissue fixed using a two-temperature fixation procedure. The top graph is data for a protocol using 30% NBF in an initial 4°C pre-treatment for the indicated period of time (left axis), followed by a 45°C treatment in 10% NBF for the indicated period of time (top axis). Darkest box indicates samples were of poor quality (upper left, 30/30 sample). Light boxes indicate samples were of moderate quality. Gray boxes indicate samples were of high quality (see bottom row right boxes). Bottom graph indicates an experiment identical to the above example but 4°C pre-treatment was performed with 40% NBF.

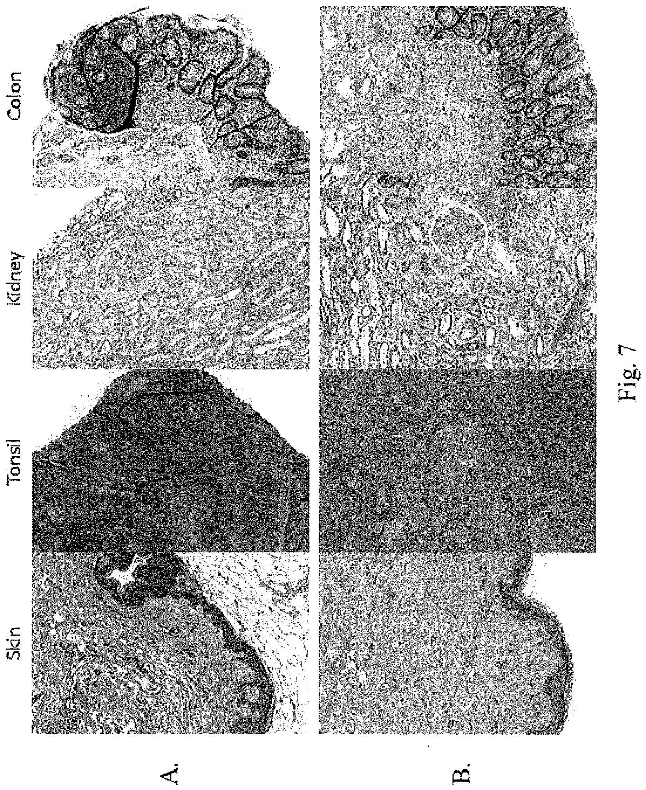

**Fig. 7: A.** H&E stained skin, tonsil, kidney, and colon tissue fixed using a two hour cold treatment in 30% NBF followed by a two hour hot treatment in 10% NBF. **B.** H&E stained skin, tonsil, kidney, and colon tissue fixed using a standard 24 hour immersion in room temperature 10% NBF.

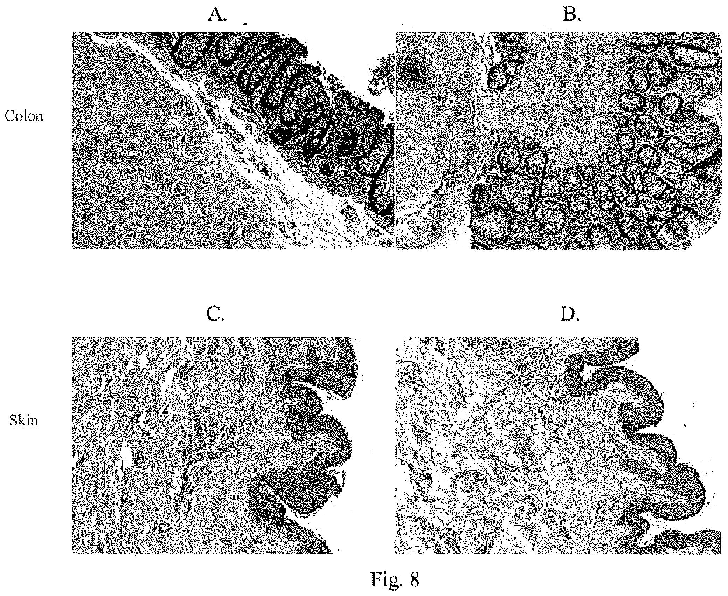

**Fig. 8: A.** H&E stained colon tissue fixed using a 6 hour cold treatment in 30% NBF followed by a 1 hour hot treatment in 10% NBF. **B.** H&E stained colon tissue fixed using a standard 24 hour immersion in room temperature 10% NBF. **C.** H&E stained skin tissue fixed using a 6 hour cold treatment in 30% NBF followed by a 1 hour hot treatment in 10% NBF. **D.** H&E stained skin tissue fixed using a standard 24 hour immersion in room temperature 10% NBF.

## DETAILED DESCRIPTION OF THE INVENTION

### I. Abbreviations and Definitions

In order to facilitate review of the various examples of this disclosure, the following explanations of abbreviations and specific terms are provided:

H&E: Hematoxylin and eosin staining.

FFPE tissue: Formalin-fixed, paraffin-embedded tissue.

IHC: Immunohistochemistry.

ISH: In situ hybridization.

NBF: neutral buffered formalin solution.

Analyte: A molecule or group of molecules that are to be specifically detected in a sample.

Analyte-binding entity: Anything that is capable of specifically binding to an analyte. Examples of analyte-binding entities include: antibodies and antibody fragments (including single chain antibodies), which bind to target antigens; t-cell receptors (including single chain receptors), which bind to MHQantigen complexes; MHC: peptide multimers (which bind to specific T-cell receptors); aptamers, which bind to specific nucleic acid or peptide targets; zinc fingers, which bind to specific nucleic acids, peptides, and other molecules; receptor complexes (including single chain receptors and chimeric receptors), which bind to receptor ligands; receptor ligands, which bind to receptor complexes; and nucleic acid probes, which hybridize to specific nucleic acids.

Antibody: The term "antibody" herein is used in the broadest sense and encompasses various antibody structures, including but not limited to monoclonal antibodies, polyclonal antibodies, multispecific antibodies (e.g., bispecific antibodies), and antibody fragments so long as they exhibit the desired antigen-binding activity.

Antibody fragment: A molecule other than an intact antibody that comprises a portion of an intact antibody that binds the antigen to which the intact antibody binds. Examples of antibody fragments include but are not limited to Fv, Fab, Fab', Fab'-SH, F(ab')2; diabodies; linear antibodies; single-chain antibody molecules (e.g. scFv); and multispecific antibodies formed from antibody fragments.

Anti-phospho-antibody: An antibody or antibody fragment that binds to a phosphorylated protein or amino acid residue, but not to a non-phosphorylated version of the same protein or amino acid residue. Examples of anti-phospho antibodies include:

- antibodies specific for a specific phosphorylated amino acid residue, such as phosphorylated histidine (anti-phospho-His), phosphorylated serine (anti-phospho-Ser), phosphorylated threonine (anti-phospho-Thr), and phosphorylated tyrosine (anti-phospho-Tyr); and
- antibodies specific for a particular antigen containing a phosphorylated amino acid, e.g. Akt phosphorylated at serine 473 (anti-phospho-Akt (Ser473))

Antigen: A compound, composition, or substance that may be specifically bound by the products of specific humoral or cellular immunity, such as an antibody molecule or T-cell receptor. Antigens can be any type of molecule including, for example, haptens, simple intermediary metabolites, sugars (e.g., oligosaccharides), lipids, and hormones as well as macromolecules such as complex carbohydrates (e.g., polysaccharides), phospholipids, nucleic acids and proteins. Common categories of antigens include, but are not limited to, viral antigens, bacterial antigens, fungal antigens, protozoa and other parasitic antigens, tumor antigens, antigens involved in autoimmune disease, allergy and graft rejection, toxins, and other miscellaneous antigens. In one example, an antigen is a Bacillus antigen, such as $\gamma$PGA.

Formalin: A saturated aqueous solution of formaldehyde, which typically contains -40% formaldehyde by volume

(~37% by mass). Also referred to as "100% formalin." In aqueous solution, formaldehyde forms a hydrate, methanediol ($H_2C(OH)_2$), which exists in equilibrium with various formaldehyde oligomers, depending on the concentration and temperature. Therefore, a small amount of stabilizer, such as methanol, is usually added to suppress oxidation and polymerization. A typical commercial grade formalin may contain 10-15% methanol in addition to various metallic impurities.

"X-% formalin": A liquid composition containing an equivalent amount of formaldehyde as formalin (as defined above) diluted in a solvent to the specified percentage on a volume to volume basis. Thus, for example, a 30% formalin solution is a solution that contains an equivalent amount of formaldehyde as a solution containing 3 parts by volume formalin (as defined above) to 7 parts by volume solvent.

Phosphatase: Any polypeptide - or complex or fragment thereof - that catalyzes the cleavage of a phosphate bond.

Phosphatase inhibitor: Any molecule that specifically inhibits the ability of a phosphatase to cleave a phosphate bond.

Kinase: Any polypeptide - or complex or fragment thereof - that catalyzes the formation of a phosphate bond on a biomolecule.

Kinase inhibitor: Any molecule that specifically inhibits the ability of a kinase to catalyze the formation of a phosphate bond.

Protease: Any polypeptide - or complex or fragment thereof - that catalyzes the cleavage of a peptide bond.

Protease inhibitor: Any molecule that specifically inhibits the ability of a protease to catalyze the cleavage of a peptide bond.

Nuclease: Any polypeptide - or complex or fragment thereof - that catalyzes the cleavage of the phosphodiester bonds between the nucleotide subunits of nucleic acids.

Nuclease inhibitor: Any molecule that specifically inhibits the ability of a nuclease to catalyze the cleavage of the phosphodiester bonds between the nucleotide subunits of nucleic acids.

Peptide: The term "peptide" is intended to encompass any arrangement of two or more amino acids joined together by amide bonds, including oligopeptides and polypeptides. When the amino acids are alpha-amino acids, either the L-optical isomer or the D-optical isomer can be used.

Oligopeptide: A peptide from 2 to 20 amino acids in length.

Polypeptide: A peptide longer than 20 amino acids in length. The terms "polypeptide" or "protein" as used herein are intended to encompass any amino acid sequence and include modified sequences such as glycoproteins.

Post-translation modification: A chemical modification of a protein after its translation. It is one of the later steps in protein biosynthesis, and thus gene expression, for many proteins. The post-translational modification of amino acids extends the range of functions of the protein by attaching it to other biochemical functional groups (such as acetate, phosphate, various lipids and carbohydrates), changing the chemical nature of an amino acid (e.g. citrullination), or making structural changes (e.g. formation of disulfide bridges). Also, enzymes may remove amino acids from the amino end of the protein, or cut the peptide chain in the middle. For instance, the peptide hormone insulin is cut twice after disulfide bonds are formed, and a pro-peptide is removed from the middle of the chain; the resulting protein consists of two polypeptide chains connected by disulfide bonds. Also, most nascent polypeptides start with the amino acid methionine because the "start" codon on mRNA also codes for this amino acid. This amino acid is usually taken off during post-translational modification. Other modifications, like phosphorylation, are part of common mechanisms for controlling the behavior of a protein, for instance activating or inactivating an enzyme.

Sample: A biological specimen obtained from a subject containing genomic DNA, RNA (including mRNA), protein, or combinations thereof. Examples include, but are not limited to, peripheral blood, urine, saliva, tissue biopsy, surgical specimen, amniocentesis samples and autopsy material.

Specific binding: Specific binding occurs when an entity binds to a molecule in a sample to the substantial exclusion of binding to other molecules. For example, an entity may be considered to specifically bind to a given molecule when it has a binding constant that is at least $10^3$ $M^{-1}$ greater, $10^4$ $M^{-1}$ greater or $10^5$ $M^{-1}$ greater than a binding constant for other molecules in the sample.

Two-temperature fixation: As used herein, the term "two-temperature fixation" refers to a fixation protocol using an aldehyde-based fixative in which the tissue sample is first immersed in an aldehyde-based fixative at a cold temperature for a sufficient period of time to allow the fixative to diffuse throughout the tissue without substantially fixing the tissue sample, and then immersed in an aldehyde-based fixative at a high temperature for a sufficient period of time to allow the aldehyde to fix the tissue sample.

## II. Introduction

Fixation preserves a biological sample (tissue or cells) for subsequent examination. There are three main methods for fixing a tissue sample. Heat fixation involves exposing a sample to sufficient heat for sufficient time to abolish the activity of cellular proteins and thereby halt cellular metabolism. Heat fixation generally preserves cellular morphology but not protein structures.

Perfusion fixes a sample by blood flow. A fixative is injected into the heart and spreads through the entire body. This process preserves morphology, but the subject dies and the process is expensive because of the volume of fixative needed.

Chemical fixation involves immersing a tissue sample in a volume of chemical fixative, typically at least 20 times the volume of the tissue to be fixed. The fixative diffuses through the tissue sample and preserves structures (both chemically and structurally) as close to that of living tissue as possible. Cross-linking fixatives, typically aldehydes, create covalent chemical bonds between endogenous biological molecules, such as proteins and nucleic acids, present in the tissue sample. Formaldehyde is the most commonly used fixative in histology. Formaldehyde may be used in various concentrations for fixation, but it primarily is used as 10% neutral buffered formalin (NBF), which is about 3.7% formaldehyde in an aqueous phosphate buffered saline solution. Paraformaldehyde is a polymerized form of formaldehyde, which depolymerizes to provide formalin when heated. Glutaraldehyde operates in similar manner as formaldehyde, but is a larger molecule having a slower rate of diffusion across membranes. Glutaraldehyde fixation provides a more rigid or tightly linked fixed product, causes rapid and irreversible changes, fixes quickly and well at 4°C., provides good overall cytoplasmic and nuclear detail, but is not ideal for immunohistochemistry staining. Some fixation protocols use a combination of formaldehyde and glutaraldehyde.

Glyoxal and acrolein are less commonly used aldehydes.

## III. Development Background

It is well known that tissue fixation kinetics can be increased by raising the temperature of the fixative. However, placing a tissue sample directly into a heated fixative can cause the outside of the tissue to cross-link well before formalin penetrated to the center of the tissue, which in turn retards or even prevents further diffusion of the fixative into the tissue. As a result, biomolecules in the center of the tissue are heated without any significant cross-linking, rendering these molecules more susceptible to degradation and damage.

It was previously demonstrated that the degree of degradation and damage could be reduced by first "presoaking" the tissue samples in cold fixative to allow the fixative to diffuse throughout the tissue, followed by a higher temperature treatment to spur the cross-linking of proteins. *See* US 2012-0214195 A1. We have found that this method can be improved by increasing the aldehyde concentration during the cold temperature pre-soak. The increased aldehyde concentration appears to increase the rate of diffusion without significantly affecting tissue morphology. As a result, post-translational modifications are better preserved compared to using standard aldehyde concentrations in the cold soak step.

## IV. Samples

In principle, the present methods may be used with any sample type that can be fixed with aldehyde-based fixatives, including cell samples (such as circulating tumor cells or peripheral blood samples and fractions thereof) and tissue samples (such as tumor core biopsies and tumor resections).

In one embodiment, the sample is a tissue sample. Typically, tissue samples for immersion fixation are limited in size to ensure that fixative diffusion occurs quickly enough and adequately enough to preserve tissue morphology. Thus, certain tissue samples, such as tumor resections and whole organs, must be dissected before fixation to ensure adequate diffusion of the fixative. This is particularly true when the tissue contains analytes of interest that are subject to degradation by residual enzyme activity in the tissue. The present methods, however, increase diffusion speed and thus enable fixation of thicker-than-normal tissue samples. In an embodiment, the tissue may be as large as a tumor resection or a whole organ. In another embodiment, the tissue sample is a tissue biopsy, such as a core needle biopsy.

The method of the invention is especially useful in preserving post-translational modifications.

## V. Fixative Compositions

### A. Aldehyde Concentration

The method of the invention relies on aldehyde-based fixative solutions having higher-than-normal concentrations of aldehyde ("high-concentration aldehyde-based fixative solution"), which is shown below to increase the rate of diffusion into the tissue and to improve the detection of post-translationally modified proteins.

Standard aldehyde concentrations used for fixation include:

- formaldehyde (standard working concentration of 5-10% formalin for most tissues, although concentrations as high as 20% formalin have been used for certain tissues);
- glyoxal (standard working concentration 17 to 86 mM);
- glutaraldehyde (standard working concentration of 200 mM).

Aldehydes are often used in combination with one another. Standard aldehyde combinations include 10% formalin + 1% (w/v) Glutaraldehyde.

Atypical aldehydes that have been used in certain specialized fixation applications include: fumaraldehyde, 12.5% hydroxyadipaldehyde (pH 7.5), 10% crotonaldehyde (pH 7.4), 5% pyruvic aldehyde (pH 5.5), 10% acetaldehyde (pH 7.5), 10% acrolein (pH 7.6), and 5% methacrolein (pH 7.6).

The formalin concentration used in the method of the present invention is 20% or more.

The concentration of aldehyde used in the invention results in a statistically significant improvement in the rate of diffusion through a selected tissue relative to the same composition containing the highest standard aldehyde concentration used for the selected tissue. In an embodiment, the high-concentration aldehyde-based fixative solution has an aldehyde concentration and pH sufficient to obtain a reduced time of diffusion to reach decay constant as determined according to Bauer *et al.* of at least 22% and up to 275% at a temperature of 2°C to 8°C relative to a standard concentration of aldehyde used for fixing the tissue sample.

In the method of the present invention the aldehyde-based fixative solution is selected from: greater than 20% formalin, in other embodiments about 25% formalin or greater, about 27.5% formalin or greater, about 30% formalin or greater, from about 25% to about 50% formalin, from about 27.5% to about 50% formalin, from about 30% to about 50% formalin, from about 25% to about 40% formalin, from about 27.5% to about 40% formalin, and from about 30% to about 40% formalin. As used in this context, the term "about" shall encompass concentrations that do not result in a statistically significant difference in diffusion at 4°C as measured by Bauer *et al.*

### B. Buffers and pH

The formalin solution of the present invention may optionally contain at least one buffer. Exemplary buffers are listed at Table 1:

**Table 1**

| Common Name | Useful pH Range | pKa (20°C) | pKa (25°C) | pKa (37°C) | Full Name |
|---|---|---|---|---|---|
| Bis-Tris | 5.8-7.2 | n/a | 6.5 | 6.36 | 2,2-Bis(hydroxymethyl)-2,2',2"-nitrilotriethanol |
| PIPES | 6.1-7.5 | 6.8 | 6.76 | 6.66 | 1,4-Piperazinediethanesulfonic acid |
| MOPSO | 6.2-7.6 | n/a | 6.9 | 6.75 | β-Hydroxy-4-morpholinepropanesulfonic acid |
| BES | 6.4-7.8 | 7.17 | 7.09 | 6.9 | N,N-Bis(2-hydroxyethyl)-2-aminoethanesulfonic acid |
| MOPS | 6.5-7.9 | 7.28 | 7.2 | 7.02 | 3-(N-Morpholino)propanesulfonic acid |
| HEPES | 6.8-8.2 | 7.55 | 7.48 | 7.31 | 4-(2-Hydroxyethyl)piperazine-1- ethanesulfonic acid |

(continued)

| Common Name | Useful pH Range | pKa (20°C) | pKa (25°C) | pKa (37°C) | Full Name |
|---|---|---|---|---|---|
| DIPSO | 7.0-8.2 | n/a | 7.6 | 7.35 | 3-(N,N-Bis[2-hydroxyethyl] amino)-2-hydroxypropanesulfonic acid |
| MOBS | 6.9-8.3 | n/a | 7.6 | n/a | 4-(N-Morphofino)butanesulfonic acid |
| HEPPSO | 7.1-8.5 | n/a | 7.8 | 6.66 | 4-(2-Hydroxyethyl)piperazine-1-(2-hydroxypropanesulfonic acid) |
| POPSO | 7.2-8.5 | n/a | 7.8 | 7.63 | Piperazine-1,4-bis(2-hydroxypropanesulfonic acid) dihydrate |
| EPPS | 7.3-8.7 | n/a | 8 | n/a | 4-(2-Hydroxyethyl)-1-piperazinepropanesulfonic acid |
| Imidazole | 6.2-7.8 | 6.9 | | | n/a |
| Maleate | 5.6-7.0 | 6.3 | | | n/a |
| Phosphate | 5.8-8.0 | 7.2 (pKa2) | | | n/a |

In an embodiment, the fixative solution is buffered at a pH from about 6 to 8 at 25°C. In another embodiment, the high fixative solution comprises at least one buffer selected from Table 1.

The fixative solution used in the method of the invention is neutral buffered formalin. Exemplary neutral buffered formalin compositions are disclosed at Table 2:

| | | 25% NBF | 30% NBF | 35% NBF | 40% NBF |
|---|---|---|---|---|---|
| **Solution Formulation** | pH | 6.81 | 6.80 | 6.80 | 6.79 |
| | Concentrated Formalin Solution (mL) | 250 | 300 | 350 | 400 |
| | 1M Phosphate Buffer pH 6.85 (mL) | 75 | 75 | 75 | 75 |
| | $H_2O$ (mL) | 675 | 625 | 575 | 525 |
| | Solution Volume (mL) | 1000 | 1000 | 1000 | 1000 |
| **Composition** | Formaldehyde (% w/v) | 9.1 | 11.0 | 12.8 | 14.6 |
| | Formaldehyde Solution (% v/v) | 25 | 30 | 35 | 40 |
| | Methanol (%) | 3.8 | 4.5 | 5.3 | 6.0 |
| | Monobasic Phosphate (mM) | 28.8 | 28.8 | 28.8 | 28.8 |
| | Dibasic Phosphate (mM) | 46.1 | 46.1 | 46.1 | 46.1 |
| | Total Phosphate (mM) | 75.0 | 75.0 | 75.0 | 75.0 |
| | $H_2O$ (%) | 67.5 | 62.5 | 57.5 | 52.5 |

**Table 2**

### C. Stabilizers

The fixative solution may also optionally contain a stabilizer. Stabilizers are used to prevent formaldehyde polymerization and/or oxidation. Exemplary stabilizers include alkanols, such as methanol, ethanol, glycerol, and sugars (such as sucrose).

### D. Osmolarity and Inorganic Salts

The fixative solution may also optionally contain one or more inorganic salts.

Typically, salts are added to adjust the osmolarity of the solution to prevent swelling or shrinking of the cells, although some salts may also assist with fixation of the tissue. In an embodiment, the high-concentration aldehyde-based fixative solution contains sufficient salt concentration to substantially prevent shrinking or swelling of cells in the tissue sample. Different cells and structures could need anything from isotonic to hypertonic solutions to retain morphology. Thus, in an embodiment, the high-concentration aldehyde-based fixative solution has an osmolarity in the range of 300 to 1200 mOsm/L at 25 °C.

Common inorganic salts used in aldehyde-based fixatives include sodium salts, such as sodium chloride, sodium acetate, and sodium sulphate; calcium salts, such as calcium chloride; potassium salts, such as potassium dichromate; zinc salts, such as zinc chloride and zinc sulphate; mercuric salts, such as mercuric chloride; and copper salts, such as copper acetate. For example, some specialized inorganic salt-containing formalin solutions used for immunohistochemistry are set forth in Table 3:

Table 3

| Solution | Standard Composition |
|---|---|
| Formal Calcium | 10% formalin + 10 g/L calcium chloride |
| Formal Saline | 10% formalin + 9 g/L sodium chloride |
| Zinc Formalin | 10% formalin + 1 g/L zinc sulphate |
| Helly's Fixative | 50 mL 100% formalin + 1 L aqueous solution containing 25 g/L potassium dichromate + 10 g/L sodium sulfate + 50 g/L mercuric chloride |
| B-5 Fixative | 2 mL 100% formalin + 20 mL aqueous solution containing 6 g/L mercuric chloride + 12.5 g/L sodium acetate (anhydrous) |
| Hollande's Solution | 100 mL 100% formalin + 15 mL Acetic acid + 1L aqueous solution comprising 25g copper acetate and 40g picric acid |
| Bouin's Solution | 250 mL 100% formalin + 750 mL saturated aqueous picric acid + 50 mL glacial acetic acid |

In an embodiment, the high-concentration aldehyde-based fixative solution is a modified form of one of the solutions of Table 3.

*E. Degradation Inhibitors*

Another feature of the present method is that they do not need exogenous degradation inhibitors (such as phosphatase inhibitors, kinase inhibitors, protease inhibitors, or nuclease inhibitors) to substantially preserve post-translationally modified proteins in a state that they can be detected by immunohistochemistry. Therefore, although such degradation inhibitors may be included in the fixative solutions, they are not required. In an embodiment, the aldehyde-based fixative solutions do not contain an effective amount of exogenously added phosphatase inhibitor or kinase inhibitor. In other embodiments, the aldehyde-based fixative solutions do not contain an effective amount of phosphatase inhibitor, kinase inhibitor, protease inhibitor, or nuclease inhibitor.

*F. Additional Exemplary Embodiments*

The aldehyde-based fixative solutions used in the method of the present invention consist essentially of, or consist of:

- greater than 20% formalin, for example, 25% or greater formalin, 27.5% or greater formalin, 30% or greater formalin, from 25% to 50% formalin, from 27.5% to 50% formalin, from 30% to 50% formalin, from 25% to 40% formalin, from 27.5% to 40% formalin, or from 30% to 40% formalin;
- optionally, one or more buffers and sufficient acid or base to adjust solution pH to a desired value;
- optionally, one or more inorganic salt; and
- optionally, one or more stabilizers.

In another exemplary embodiment, the aldehyde-based fixative solutions used in the method of the present invention may comprise, consist essentially of, or consist of a greater than 20% neutral buffered formalin, for example, 25% or greater formalin, 27.5% or greater formalin, 30% or greater formalin, from 25% to 50% formalin, from 27.5% to 50% formalin, from 30% to 50% formalin, from 25% to 40% formalin, from 27.5% to 40% formalin, or from 30% to 40% formalin.

In another exemplary embodiment, the aldehyde-based fixative solutions used in the method of the present invention may be selected from the group consisting of formal calcium, formal saline, zinc formalin, Helly's fixative, B-5 fixative, Hollande's Solution, or Bouin's Solution, with the proviso that the composition is modified to contain at least 20% formalin.

In the context of these exemplary embodiments, the term "consists essentially of" shall mean that the composition does not contain any additional additives at a concentration sufficient either to substantially alter the rate of diffusion into the tissue at 4°C relative to the same composition without the additional additives or to substantially alter the degree to which post-translational modifications are preserved in the sample relative to the composition without the additional additives.

## VI. Fixation Process

Certain disclosed embodiments concern a multi-step, typically a two-step, tissue fixation process for infusing/diffusing a tissue sample using the high-concentration aldehyde-based fixative solutions described above. During a first step, a tissue sample is treated with the high concentration aldehyde-based fixative solution as described above under conditions that allow the fixative to diffuse throughout substantially the entire cross section of the sample. This first step is conducted using a fixative composition for a first period of time, and at a first temperature, that effects substantially complete tissue infusion/diffusion. The second step is to subject the tissue sample to a fixative composition at a second, higher temperature to allow cross-linking to occur at as fast a rate as possible without compromising the tissue characteristics, such as antigenicity and morphology.

For the following discussion of processing steps, a person of ordinary skill in the art will appreciate that various factors may be considered to deduce optimal processing conditions for a particular tissue sample. These factors include: sample thickness; volume of fixative solution to tissue sample mass, which typically is from about 10:1 to about 50:1 volume to mass; fixative composition; temperature; pH; and sample immersion time in the fixative composition.

The preferred description of the first and second times of soaking in cross-linking fixative is based on the ASCO CAP guidelines where the preferred tissue thickness is up to approximately 4 mm. The tissue thickness can be less or more than 4 mm, even up to whole organs. Since the invention relies on a first diffusion step, thicker tissue sections would require a first time in cold fixative greater than the preferred 1-5 hours and up to 12 hours or more. In addition, anyone skilled in the art could understand that the second time in fixative solution might be greater than the preferred method of 1-5 hours and up to 8 hours or more. For example, a tissue sample of 6 mm thick might have a preferred first time in fixative solution of 4 hours and a second time in fixative solution of 4 hours or more. It is also understood in the art that some tissue types and some tissue organs may have slightly different times.

The first step of the process is to subject a tissue sample to high-concentration aldehyde-based under conditions effective to allow substantially complete diffusion of the composition throughout substantially the entire cross section of the sample. An effective temperature range for the first step is from greater than -20°C to at least 15°C, preferably greater than 0°C to an upper temperature more typically about 10°C, and even more typically from about 1°C to about 7°C. For working embodiments, the temperature typically was about 4°C.

As the temperature increases, the rate of cross-linking increases. And this first processing step attempts to balance the beneficial properties associated with substantially complete diffusion of fixative composition throughout the entire cross section of the tissue sample while minimizing the effects associated with initializing cross-linking. However, diffusion also increases with increasing temperature, and so for a given sample, it has been found that maximizing the rate of diffusion while minimizing any deleterious effects associated with increased cross-linking rate appears to increase benefits.

Diffusion of the fixative composition into the tissue sample is continued for a time period effective for diffusion of the composition throughout substantially the entire cross section of the sample. The time period for the first processing step ranges from about 15 minutes up to about 4 hours, most typically from greater than 15 minutes to about 3 hours, with good results typically being obtained by conducting the fixative composition diffusion step for about 1.5 hours to about 2 hours. Although increasing the diffusion time to 4 hours or greater generally had little beneficial effect, leaving tissues in the cold formalin for an extended period of time (for example, up to 14 days) generally does not have a deleterious effect on processing.

The temperature associated with the second processing step typically is higher than ambient, such as higher than about 22°C. For working embodiments, the temperature typically was greater than ambient up to at least 55°C, more typically from about 35°C to about 45°C, as this temperature range increases the cross-linking kinetics sufficiently to allow relatively quick tissue cross-linking. However, if the temperature is increased above about 50°C, the sample generally begins to degrade, which may have a deleterious effect on certain subsequent histological reactions. Thus, the upper temperature and time period are selected to allow subsequent imaging process steps, such as in situ hybridization, IHC and/or H & E, to proceed effectively. The time period for the second processing step ranges from greater than 15 minutes up to at least about 5 hours, more typically is at least about 1 hour to about 4 hours, and more typically is from about 2 hours to about 3 hours. In certain embodiments, the second processing step is conducted for 1.5 hours at 45°C.

## VII. Further Tissue Processing

After fixation, the tissue may be further processed to prepare it for storage and/or analysis. Many post-fixation processes are well-known and would be well understood by a person of ordinary skill in the art. For example, protocols for using zinc formalin, Helly's fixative and Hollande's require a water wash after fixation to remove various contaminates. Some protocols for Bouin's and B-5 suggest storing the fixed samples in 70% ethanol before processing. Additionally, some specimens may be difficult to cut on a microtome because of calcium carbonate or phosphate deposits, and thus may require decalcification. Other post-fixation tissue processing would be well-known to a person having ordinary skill in the art.

In one embodiment, the fixed and processed tissue may be paraffin embedded. In the typical example, the fixed tissue sample is subjected to a series of alcohol immersions to dehydrate the sample, typically using increasing alcohol concentrations ranging from about 70% to about 100%. The alcohol generally is an alkanol, particularly methanol and/or ethanol. After the last alcohol treatment step the sample is then immersed into another organic solvent, commonly referred to as a clearing solution. The clearing solution (1) removes residual alcohol, and (2) renders the sample more hydrophobic for a subsequent waxing step. The clearing solvent typically is an aromatic organic solvent, such as xylene. Wax blocks are formed by applying a wax, typically a paraffin wax, to the sample. Slides are then cut from the wax block.

After processing, the samples can be stored as frozen or paraffin-embedded blocks. Typically, before tissue analysis, the blocks are sliced into thin sections using a microtome.

## VIII. Post-processing analysis

Fixed tissue samples obtained by the processes and compositions disclosed herein can be used together with any staining systems and protocol known in the art of histochemistry, as well as immunohistochemistry and *in situ* hybridization. The present invention can also be used together with various automated staining systems, such as those marketed by Ventana Medical Systems, Inc., Tucson, Ariz., including the Benchmark XT, Benchmark Ultra, and Discovery automated platforms. Exemplary systems are disclosed in U.S. Pat. No. 6,352,861, U.S. Pat. No. 5,654,200, U.S. Pat. No. 6,582,962, U.S. Pat. No. 6,296,809, and U.S. Pat. No. 5,595,707.

Additional information concerning automated systems and methods also can be found in PCT/US2009/067042.

Chromogenic detection facilitates visual unaided deciphering of patterns on the device.

In an embodiment, specific analytes are detected using immunohistochemistry (IHC). In the typical IHC protocol, a tissue sample is contacted first with an analyte-specific antibody under conditions sufficient to permit specific binding of the analyte-specific antibody to the analyte.

In exemplary embodiments, detection of specific analytes is realized through antibodies capable of specific binding to the analyte (or antibody fragments thereof) conjugated with multiple enzymes (e.g. horse radish peroxidase (HRP), alkaline phosphatase (AP). This enzyme-antibody conjugate is referred to as an HRP or AP multimer in light of the multiplicity of enzymes conjugated to each antibody. Multimer technologies are described in U.S. application Ser. No. 12/687,564 for disclosure related to antibody conjugates. This type of detection chemistry technology is currently marketed by Ventana Medical Systems Inc., as ultra View Universal DAB detection kit (PIN 760-500), ultra View Universal AP Red detection kit (PIN 760-501), ultraView Red ISH DIG detection kit (PIN 760-505), and ultraView SISH DNP detection kit (PIN 760-098).

In illustrative embodiments, the approach uses non-endogenous haptens (e.g. not biotin, see U.S. application Ser. No. 12/660,017 for disclosure related to detection chemistries). In illustrative embodiments, a tyramide signal amplification may be used with this approach to further increase the sensitivity and dynamic range of the detection (See PCT/US2011/042849 for disclosure related to detection chemistries).

Any suitable enzyme/enzyme substrate system can be used for the disclosed analysis/detection method. Working embodiments typically used alkaline phosphatase and horseradish peroxidase. If the enzyme is alkaline phosphatase, one suitable substrate is nitro blue tetrazolium chloride/(5-bromo-4-chloro-1H-indol-3-yl)dihydrogen phosphate (NBT/BCIP). If the enzyme is horseradish peroxidase, then one suitable substrate is diaminobenzidine (DAB). Numerous other enzyme-substrate combinations are known to those skilled in the art. For a general review of these, see U.S. Pat. Nos. 4,275,149, and 4,318,980. In some embodiments, the enzyme is a peroxidase, such as horseradish peroxidase or glutathione peroxidase or an oxidoreductase.

U.S. Patent Publication 2008/0102006 describes robotic fluid dispensers that are operated and controlled by microprocessors. U.S. Patent Publication 2011/0311123 describes methods and systems for automated detection of immunohistochemical (IHC) patterns. The automated detection systems disclosed in these patent applications can be used to detect analytes in the fixed tissue samples of the present invention.

In especially preferred embodiments, the fixed tissue samples are analyzed by immunohistochemistry for the presence of post-translationally modified proteins. In the typical process, the fixed tissue sample is contacted with an analyte-binding entity capable of specifically binding to the post-translationally modified protein under conditions sufficient to effect binding of the analyte-binding entity to the post-translationally modified protein; and binding of the analyte-binding entity to the post-translationally modified protein is detected. The precise conditions for effective IHC generally need to be worked on an individual basis, depending upon, for example, the precise antibody used, the type of sample used, sample size, further processing steps, *et cetera.*

In an embodiment, the post-translational modification is one that is susceptible to loss during a standard aldehyde fixation process due to residual enzyme activity within the tissue sample. One could determine whether a given post-translational modification is susceptible to residual enzyme activity by treating a sample with an entity that leads to increased presence of the post-translational modification. The sample could then be fixed using a standard technique (such as 24 hour fixation in room temperature NBF) and a fixation process as disclosed herein and the amount of signal detectable in each of the samples can be compared. If signal is absent or significantly lower in the sample fixed according to standard techniques, then one can assume that the post-translational modification is susceptible to degradation by residual enzyme activity. Thus, in an embodiment, the post-translational modification is a post-translational modification that is substantially undetectable in a tissue fixed for 24 hours in room temperature NBF without a cold temperature pre-treatment, but is detectable in a substantially identical tissue sample that has been fixed using a two-temperature fixation using a high-concentration aldehyde-based fixative solution as described above in the cold temperature step.

In an embodiment, the post-translational modification is a diagnostic or prognostic marker for a disease state of the tissue sample. In an embodiment, the post-translational modification is a predictive marker for an effect of a therapy on a disease state of the tissue. In an embodiment, the post-translational modification is a phosphorylation.

## IX. Examples

**Example 1.** H-scores for pAKT staining level in colorectal cancer tissues are summarized for a set of 10 specimen collected with controlled cold ischemia condition (5-15 minutes). Each sample was cut into two groups of specimen sizes: 3 biopsies, "Biop" (typically with 2mm diameter), and 3 resections, "Spec" (typically 10 x 10 x 5 mm). All specimen were then immersed into either 4°C cold formalin with 10% or 30% concentrations, or RT 10% formalin. Samples were then stained for phospho-Akt using an anti-phospho-Akt (Ser473) monoclonal antibody (Cell Signaling Technologies). The following formula was used to calculate individual Hscores per sample:

$$\textbf{Hscore} = \textbf{(low\%)} * \textbf{1} + \textbf{(medium\%)} * \textbf{2} + \textbf{(high\%)} * \textbf{3}$$

Results are shown at Fig. 1. Graph represents average pAKT Hscore for all 10 patient samples. For both sample sizes, the cold fixation method shows superior staining levels, with 30% showing the strongest Hscores.

**Example 2.** 6 mm thick samples of colon, breast, skin, fat, and tonsil tissue were immersed in either 10% NBF or 30% NBF at 4°C and the rate of fixative penetration was measured by the method of Bauer *et al.* Results are shown at Fig. 2A and 2B. In Fig. 2A, the diffusion trend over time was fit to a single exponential curve. The reported decay constant, measured in hours, of that exponential curve mathematically represents the time it takes the signal to decrease by 63% of its entire amplitude and was thus used as a quantitative metric of how long diffusion takes. In Fig. 2B, diffusion speed gain comparing rate of diffusion with 30% vs 10% NBF was calculated as the differential of the decay constant's from each respective reagent. All types of tissue display noticeably faster diffusion in 30% NBF. The rate of diffusion increase was calculated as 100*(10% decay constant)/(30% decay constant), e.g. for fat 100*4.4hr / 1.6 hr = 275% faster.

**Example 3. Fig. 3, Row A1 and A2** Calu3 Xenograft tumors were harvested and placed into fixative within 5 minutes. A biopsy coring device was used to remove 6 mm diameter samples from xenografts tumors to ensure the samples were of uniform size. Cores were placed into 4°C formalin at 10%, 20% or 20% + a phosphatase inhibitor cocktail for 2 hours. Cores were then placed into 45° C 10% NBF for 2 hours to initiate crosslinking. Samples were processed, embedded in wax and stained with an anti-pAKT antibody. **Fig. 3, Row B1 and B2** Human tonsil samples cut to 4 mm thickness were placed into 4° C formalin at 10%, 20%, 30%, or 40% NBF for 2 hours. Samples were then placed into 45°C 10% NBF for 2 hours to initiate crosslinking. An additional sample was placed into room temperature (RT) 10% NBF for 24 hours as a control. All samples were processed, embedded and stained with either bcl-2 (B1) or PTEN (B2). Results are shown at Fig. 3.

**Example 4.** Calu3 Xenograft tumors were harvested and placed into fixative within 5 minutes. A biopsy coring device was used to remove 6 mm diameter samples from xenografts tumors to ensure the samples were of uniform size. Cores were placed into 4°C formalin at 10%, 20%, 30%, or 40% NBF for 2 hours. Samples were then placed into 45°C 10% NBF for 2 hours to initiate crosslinking. An additional larger sample (piece) was placed into 4°C 40% formalin. An additional sample was placed into room temperature (RT) 10% NBF for 24 hours as a control. All samples were processed, embedded and stained with an anti-pAKT antibody. Results are shown at Fig. 4.

**Example 5.** Calu3 Xenograft tumors were harvested and placed into fixative within 5 minutes. A biopsy coring device was used to remove 6 mm diameter samples from xenograft tumors to ensure the samples were of uniform size. Cores were placed into 30% NBF at 4°C for 22 hours to ensure maximum diffusion of fixative. Samples were then placed into 45°C 10% NBF for indicated times (5 - 120 minutes). All samples were processed, embedded and stained with an anti-pAKT antibody. Results are shown at Fig. 5.

**Example 6.** Human tonsil samples were cut to 4mm thickness and placed into 30% NBF at 4°C for indicated times (along y axis, 30 or 60 minutes). Samples were then placed into 45°C 10% NBF for 0.5, 1 or 2 hours to initiate crosslinking (along X axis, 30-120 minutes). All samples were processed, embedded and stained with hematoxylin and eosin and evaluated for quality of tissue morphology. Results are shown at Fig. 6.

**Example 7.** Human tissue samples (colon, kidney, tonsil and skin) were collected, sliced to 4mm thickness. Pieces of the samples were placed into room temperature (RT) 10% NBF for 24 hours as controls. Identical samples were also placed into 30% NBF at 4°C for 2 hours. Samples were then placed into 45°C 10% NBF for 2 hours to initiate crosslinking. All samples were processed, embedded and stained with hematoxylin and eosin and evaluated for quality of tissue morphology. Results are shown at Fig. 7.

**Example 8.** Human colon tissue and skin tissue was fixed using either: (a) a 6 hour cold (4°C) pretreatment treatment in 30% NBF followed by a 1 hour hot treatment (45°C) in 10% NBF; or (b) a standard 24 hour immersion in room temperature 10% NBF. The fixed tissue was subsequently stained with H&E and slides examined by a trained pathologist. The pathologist concluded that all of the slides exhibited "adequate, i.e. essentially perfect, H&E histology." Exemplary images are shown in Fig. 8.

**REFERENCES**

Bauer et al., Dynamic Subnanosecond Time-of-Flight Detection for Ultra-precise Diffusion Monitoring and Optimization of Biomarker Preservation, Proceedings of SPIE, Vol. 9040, 90400B-1 (2014-Mar-20).

Krueger and Srivastava, Posttranslational Protein Modifications: Current Implications for Cancer Detection, Prevention, and Therapeutics, Molecular & Cellular Proteomics, Vol. 5, Issue 10, p. 1799-810 (2006-Jul-14).

Lawson et al. Cytotoxicity effects of cryoprotectants as single- component and cocktail vitrification solutions, Cryobiology, vol. 62, issue 2, p. 115-122 (2011-Jan-22).

**Claims**

1. A method of fixing a tissue sample, wherein:

    (a) the tissue sample is immersed in a high-concentration aldehyde fixative solution having a formalin concentration of greater than 20% at a temperature within the range of about -20°C to about 15°C for a first time period from about 15 minutes up to about 4 hours; and
    (b) the tissue sample is immersed in a 5-10% formalin solution at a second temperature within the range of about 22°C to about 50°C for a second time period from greater than 15 minutes up to at least about 5 hours.

2. The method of claim 1, wherein the first time period is from greater than 15 minutes to about 3 hours, preferably from about 1.5 hours to about 2 hours.

3. The method of claim 1 or 2, wherein the second time period is from at least about 1 hour to about 4 hours, preferably from about 2 hours to about 3 hours, or wherein step (b) is conducted for 1.5 hours at 45°C.

4. A fixed tissue sample obtained by the method of any of claims 1-3, optionally wherein said fixed tissue sample is embedded in paraffin.

**Patentansprüche**

1. Verfahren zum Fixieren einer Gewebeprobe, wobei:

    (a) die Gewebeprobe in eine hochkonzentrierte Aldehydfixierungslösung mit einer Formalinkonzentration von mehr als 20 % bei einer Temperatur im Bereich von etwa -20 °C bis etwa 15 °C für einen ersten Zeitraum von etwa 15 Minuten bis zu etwa 4 Stunden eingetaucht wird; und
    (b) die Gewebeprobe in eine 5-10%ige Formalinlösung bei einer zweiten Temperatur im Bereich von etwa 22 °C bis etwa 50 °C für einen zweiten Zeitraum von mehr als 15 Minuten bis zu mindestens etwa 5 Stunden eingetaucht wird.

2. Verfahren nach Anspruch 1, wobei der erste Zeitraum von mehr als 15 Minuten bis etwa 3 Stunden, vorzugsweise von etwa 1,5 Stunden bis etwa 2 Stunden ist.

3. Verfahren nach Anspruch 1 oder 2, wobei der zweite Zeitraum von mindestens etwa 1 Stunde bis etwa 4 Stunden, vorzugsweise von etwa 2 Stunden bis etwa 3 Stunden ist, oder wobei Schritt (b) für 1,5 Stunden bei 45 °C durchgeführt wird.

4. Fixierte Gewebeprobe, erhalten durch das Verfahren nach einem der Ansprüche 1-3, gegebenenfalls wobei die fixierte Gewebeprobe in Paraffin eingebettet ist.

**Revendications**

1. Procédé de fixation d'un échantillon de tissu, dans lequel :

(a) l'échantillon de tissu est immergé dans une solution de fixation d'aldéhyde de concentration élevée ayant une concentration en formol supérieure à 20 % à une température dans la plage d'environ -20 °C à environ 15 °C pendant une première période de temps d'environ 15 minutes jusqu'à environ 4 heures ; et
(b) l'échantillon de tissu est immergé dans une solution de formol à 5 à 10 % à une seconde température dans la plage d'environ 22 °C à environ 50 °C pendant une seconde période de temps de plus de 15 minutes jusqu'à au moins environ 5 heures.

2. Procédé selon la revendication 1, dans lequel la première période de temps est de plus de 15 minutes à environ 3 heures, de préférence d'environ 1,5 heure à environ 2 heures.

3. Procédé selon la revendication 1 ou 2, dans lequel la seconde période de temps est d'au moins environ 1 heure à environ 4 heures, de préférence d'environ 2 heures à environ 3 heures, ou dans lequel l'étape (b) est réalisée pendant 1,5 heure à 45 °C.

4. Échantillon de tissu fixé obtenu par le procédé selon l'une quelconque des revendications 1 à 3, éventuellement dans lequel ledit échantillon de tissu fixé est inclus en paraffine.

Fig. 1

Fig. 2

Fig. 3

10%  20%  30%

6mm

40%  40%  24 hr

Large Piece

Fig. 4

Fig. 5

Fig. 6

Skin    Tonsil    Kidney    Colon

A.

B.

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62051737
- WO 2008073187 A2
- WO 2011130280 A1
- US 20120214195 A1
- US 6352861 B
- US 5654200 A
- US 6582962 B
- US 6296809 B
- US 5595707 A
- US 2009067042 W
- US 687564
- US 660017
- US 2011042849 W
- US 4275149 A
- US 4318980 A
- US 20080102006 A
- US 20110311123 A

### Non-patent literature cited in the description

- **KRUEGER ; SRIVASTAVA.** Posttranslational Protein Modifications: Current Implications for Cancer Detection, Prevention, and Therapeutics. *Molecular & Cellular Proteomics,* 14 July 2006, vol. 5 (10), 1799-810
- **LAWSON.** *Cytotoxicity effects of cryoprotectants as single-component and cocktail vitrification solutions,* 2011, vol. 62 (2), 115-122
- **BAUER et al.** Dynamic Subnanosecond Time-of-Flight Detection for Ultra-precise Diffusion Monitoring and Optimization of Biomarker Preservation. *Proceedings of SPIE,* 20 March 2014, vol. 9040, 90400B-1
- **LAWSON et al.** Cytotoxicity effects of cryoprotectants as single- component and cocktail vitrification solutions. *Cryobiology,* 22 January 2011, vol. 62 (2), 115-122